# EUROPEAN PATENT APPLICATION

(11) **EP 3 255 011 A1**
(43) Date of publication of application: **13.12.2017**
(21) Application number: 17174595.3
(22) Date of filing: 06.06.2017
(51) Int. Cl.: B66B 29/00

(54) **A DETECTION DEVICE FOR CONVEYOR, A CONVEYOR, AND AN ASSOCIATED METHOD**

(30) Priority: 08.06.2016 CN 201610405683
(71) Applicant: KONE Corporation, 00330 Helsinki (FI)
(72) Inventor: Fan Jin Quan, Kevin, Kunshan, 215300 (CN)
(74) Representative: K & H Bonapat Patentanwälte Koch · von Behren & Partner mbB

(57) **Abstract**

Embodiments of the present disclosure relate to a detection device, a conveyor and an associatedmethod. The detection device includes: an attaching member for fixating the detection device to the conveyor; an axle coupled to the attaching member; a roller rotatably disposed around the axle and abutting against a pedal of the conveyor and being actuated by the pedal in response to a movement of the pedal along a first direction; and a sensor for detecting an operating state of the conveyor by detecting the operating state of the roller.

## Description

### FIELD

Embodiments of the present disclosure generally relate to a conveyor, and more specifically, to a detection device for detecting an operating state of a conveyor, a conveyor, and an associated method.

### BACKGROUND

In the field of conveyors, the detection of the operating state of conveyors, such as automatic escalator or pedestrian walk has become one of the key techniques. The detection of the operating state of conveyors includes, for example, the detection of running speed and direction of the conveyor. For instance, when the conveyor malfunctions, for example, the conveyor may suddenly run over-speed or reverse its direction. If so, the safety of the people or goods standing on the pedal of the conveyor would possibly be threaten. Therefore, it is important to timely and accurately determine the operating state of the conveyor.

Based on different structures and purposes of the conveyor, the state of the conveyor can be detected, for example, by detecting the motion speed and direction of the fly wheel and chain wheel of the main motor and the gear on the main drive axle. However, the above detection methods all belong to the so-called "indirect" detection methods, rather than the "direct" detection of the pedal or step on which people stand. Therefore, the traditional methods for monitoring the state of the conveyor have defects of lacking detection accuracy and rapidity.

### SUMMARY

In general, embodiments of the present disclosure provide a detection device for detecting an operating state of a conveyor, a conveyor, and an associated method.

In a first aspect, embodiments of the present disclosure provide a detection device for detecting an operating state of a conveyor. The detection device includes an attaching member for fixating the detection device to a conveyor; an axle coupled to the attaching member; a roller rotatably disposed around the axle, the roller abutting against a pedal of the conveyor and being actuated by the pedal in response to a movement of the pedal along a first direction; and a sensor for detecting an operating state of the conveyor by detecting the operating state of the roller.

In a second aspect, the embodiments of the present disclosure provide a conveyor. The conveyor includes a detection device of the first aspect, and the detection device is configured to detect the operating state of the conveyor by detecting the operating state of the pedal of the conveyor. The conveyor can be a horizontal conveyor without steps (hereafter also referred to step-less conveyor) or a conveyor with steps (hereafter also referred to stepped conveyor).

In a third aspect, embodiments of the present disclosure provide the use of the detection device for detecting the operating state of the conveyor, according to the first aspect of the present disclosure.

The detection device according to embodiments of the present disclosure is a direct detection device. Compared to the traditional indirect detection solutions, the direct detection method is quite advantageous in many circumstances. As an example, when the coupling connecting the motor to the gearbox breaks down (that is, coupling failure), the rotational speed of the motor remains the same, while the operating speed of the step or pedal actually has been reduced or reversed due to the coupling failure. As another example, when some steps or pedals are already missing, the rotational speed of the motor also remains the same. Those situations discussed as above, however, may possibly threaten the safety of the people standing thereon. In this case, if the detection device still determines the operating state of the conveyor by detecting the operating state of the fly wheel associated with the motor like traditional solutions, the operating state of the conveyor cannot be accurately determined. Embodiments of the present disclosure can effectively solve this situation to accurately detect the state.

It should be understood that the summary does not aim to identify key or vital features of the embodiments of the present disclosure, or limit the scope of the present disclosure. Other features of the present disclosure can be easily understood through the following description.

### BRIEF DESCRIPTION OF THE DRAWINGS

Through the following detailed description with reference to the accompanying drawings, the features and advantages of the present disclosure will become more apparent. In the drawings:
Fig. 1a illustrates a front view of a detection device for detecting an operating state of a conveyor according to embodiments of the present disclosure;
Fig. 1b illustrates a side view of the detection device for detecting an operating state of a conveyor according to embodiments of the present disclosure;
Fig. 1c shows a rear view of the detection device for detecting an operating state of a conveyor according to embodiments of the present disclosure;
Fig. 1d illustrates a front view of the detection device for detecting an operating state of a conveyor according to embodiments of the present disclosure;
Fig. 2 illustrates a detection device mounted below a plane of continuous horizontal pedals at a returning side of a step-less horizontal conveyor, according to embodiments of the present disclosure;
Fig. 3 illustrates a side view of one end of a stepped conveyor equipped with a detection device according to embodiments of the present disclosure;
Fig. 4 illustrates a side view of the other end of a stepped conveyor according to embodiments of the present disclosure; and
Fig. 5 shows a detection device mounted at the stepped conveyor as shown in Fig. 4 where the detection device is arranged at the higher floor end, and on a lateral side of a step of the transport side of the stepped conveyor.

In all drawings, same or similar reference numbers indicate same or similar elements.

### DETAILED DESCRIPTION OF EMBODIMENTS

Principles of the present disclosure will now be described with reference to various example embodiments illustrated in the drawings. It should be appreciated that description of those embodiments is merely to enable those skilled in the art to better understand and further implement example embodiments disclosed herein and is not intended for limiting the scope disclosed herein in any manner. The content of the present disclosure described herein can be implemented by various methods besides the following depicted ones.

As used herein, the term "includes" and its variants are to be read as open-ended terms that mean "includes, but is not limited to." The term "based on" is to be read as "based at least in part on." The term "one embodiment" is to be read as "at least one example embodiment." The term "a further embodiment" is to be read as "at least one further embodiment."

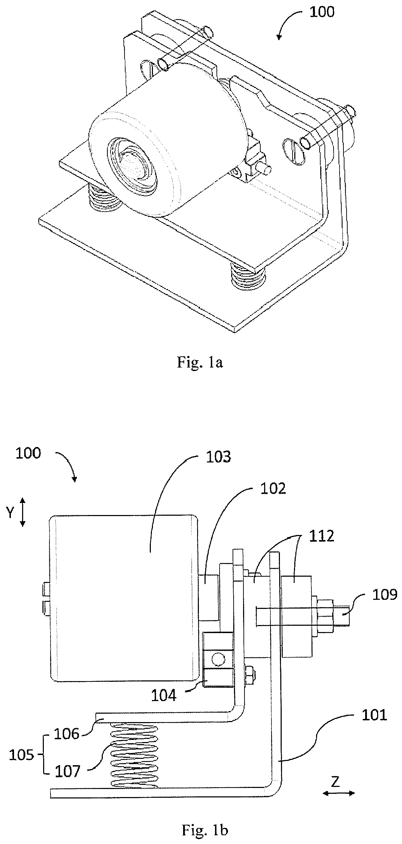

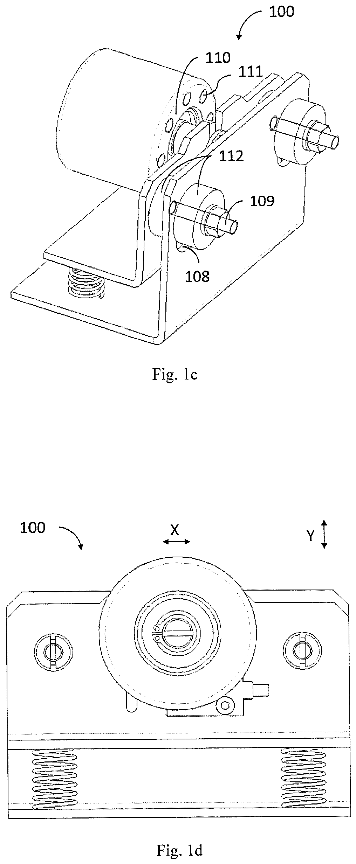

Figs. 1a-1d illustrate a detection device 100 for detecting the operating state of the conveyor according to embodiments of the present disclosure. Particularly, Fig.1a illustrates a front perspective view of the detection device 100. Fig. 1b illustrates a side view of the detection device 100. Fig. 1c illustrates a rear perspective view of the detection device 100. Fig. 1d illustrates a front view of the detection device 100.

According to embodiments of the present disclosure, as shown in Fig. 1b, the detection 100 includes an attaching member 101. The attaching member 101 fixes the detection device 100 to the conveyor. For example, the attaching member 101 can fix the detection device 100 to a guide rail of the conveyor or to any solid plane. In particular, the detection device 100 can be mounted surrounding the pedal or steps to directly detect the operating state of the pedal or steps.

The attaching member 101 is coupled with an axle 102, around which a roller 103 is rotatably arranged. According to embodiments of the present disclosure, the roller 103 is abutted against the pedal of the conveyor (not shown in Figs. 1a-1d) and is actuated by the pedal in response to the movement of the pedal along a first direction X (see Fig. 1d). To be more specific, when the pedal passes the roller 103 along the first direction X, the roller 103 makes rolling contact with the pedal. In this way, the movement of the pedal can be converted into the rolling of the roller 103. It is to be noted that when some pedals or steps are missing, the steps or pedals, which should pass the roller 103, will be replaced by one or more segments of open space, and as such, the roller 103 cannot be actuated and thus the expected detection signal cannot be generated. In this way, the detection device 100 can also effectively detect whether the pedals or steps are missing.

In some embodiments, the surface of the roller 103 may be made of nylon, rubber or metal. Of course, the above-mentioned materials are only exemplary and any other suitable materials are also possible. In some embodiments, the surface of the roller 103 can also have surface pattern, such as teeth or stripes. As such, when the roller 103 contacts the surface of the pedal or step, the engagement or friction therebetween can be enhanced, so as to prevent slipping during the contact between the roller and the surface of the pedal or step. This facilitates the accurate transfer of the motion speed and direction of the movement of the pedal or step to the roller 103, and thereby improving the accuracy and stability of state detection.

According to embodiments of the present disclosure, a sensor 104 is disposed near the roller 103 and is configured to detect a signal indicating an operating state of the roller 103, so as to determine the operating state of the conveyor. In some embodiments, the sensor 104 can be implemented by a non-contact sensor. For example, in some embodiments, the non-contact sensor 104 can include, but not limited to, a proximity sensor, an ultrasonic sensor, a photoelectric sensor, a magneto-electric sensor, a laser sensor and so on. In the embodiments as shown in Figs. 1a-1d, the sensor 104 is a non-contact sensor. Alternatively, or in addition, in some embodiments, the sensor 104 can be implemented by a contact sensor.

Furthermore, as indicated in Fig. 1c, in some embodiments, at the side adjacent to the sensor 104, a plurality of metal points 111 may be attached on the end face 110 of the roller 103. The metal points 111 can be equally spaced on the end face 110. It is to be understood that non-uniform distribution of the metal points is also feasible. When the roller 103 rotates, the metal points 111 pass the sensor 104, and both of the metal points 111 and the sensor 104 coordinate with each other to generate a signal indicative of operating speed and direction of the pedal or step. For example, in some embodiments, the generated signal can have a particular pattern or shape, such as periodic or aperiodic pulse sequence. In case that a pedal is missing, due to the fact that the roller 103 will not rotate, no metal point 111 will pass the sensor 104. Therefore, no signal indicative of operating speed and direction of the pedal or step can be generated.

In such embodiments, the period of the pulse sequence can be adjusted by changing the space between neighboring metal points 111. Specifically, the amount of pulses corresponding to the number of metal points 111 that rotatably pass the sensor 104 can be measured within a given time period, and thereby it can be determined whether the speed is normal or not. For instance, the amount of pulses measured per unit time will reduce along with the decrease of running speed of the conveyor. Alternatively, or in addition, whether the speed is normal or whether the motion of the conveyor is reversed can be determined by using two sensors with additional logic operations.

It is to be noted that the present disclosure is not intended for limiting the form and amount of the sensor. Rather, a variety of forms and numbers of the sensor that can convert the speed and direction of the conveyor into corresponding physical signals, such as electric, optic, or magnetic signals, all fall within the protection scope of the present disclosure.

According to embodiments of the present disclosure, as shown in Figs. 1a-1d, the detection device 100 further includes a coupling member 105. The coupling member 105 is compressibly coupled between the axle 102 and the attaching member 101 in the second direction Y that is substantially perpendicular to the first direction X. In response to the contact between the roller 103 and the pedal, the coupling member 105 applies pressure to the pedal of the conveyor via the roller 103 in the second direction Y. The pressure applied onto the pedal is also beneficial to increase the friction between the roller 103 and the surface of the step or pedal, to ensure that the speed and direction of the movement of the pedal or step can be accurately transferred to the roller 103. Thereby, further increasing the accuracy and stability of state detection.

The coupling member 105 may have a variety of suitable implementations. In the embodiments as shown in Figs. 1a-1d, the coupling member 105 includes a fixing member 106 and an elastic member 107. The fixing member 106 may have a face extending along X and Y directions and a face extending along X and Z directions. The two faces are perpendicular to each other and form an "L" shaped member. Besides, the two faces can either be integrally formed, or separately formed and connected (e.g., soldering) together. The axle 102 and the sensor 104 are fixed to a plane extending along X and Y directions (that is, the XY plane), so as to maintain the relative positioning of the roller 103 and the sensor 104. In this way, even if a pressure is applied to the pedal via the roller 103, the pressure applied on the roller 103 from the pedal or step will not impact the physical signal generated by rotation of the roller 103 because the fixing member 106 maintains the relative position of the roller 103 and the sensor 104.

The elastic member 107 is compressibly coupled between the fixing member 106 and the attaching member 101 in the second direction Y, so as to apply pressure onto the pedal in the second direction Y The elastic member 107 as shown in Figs. 1a-1d is a compression spring. Of course, other types of elastic members, such as clip, are also feasible. The number of the elastic members 107 can also be determined according to requirements. In the embodiments of Figs. 1a-1d, the elastic member 107 includes two compression springs, which are distributed along the direction X and symmetrically distributed relative to the roller 103. One end of each compression spring 107 is fixed to the plane of the fixing member 106 along the X and Z directions (that is, the XZ plane) and the other end is fixed to the attaching member 101. It should be appreciated that the embodiments of the present disclosure do not aim to limit the type, number and distribution of the elastic members 107. Those skilled in the art can select any suitable type, number and distribution of the elastic member 107 based on the requirements to apply pressure onto the pedal in the second direction Y.

As shown in Fig. 1b, in some embodiments, the attaching member 101 may also have an "L" shape matching with the L-shaped fixing member 106, that is, a face extending along X and Y directions and a face extending along X and Z directions. As shown in Fig. 1c, in some embodiments, the attaching member 101 may also have one or more holes 108. Correspondingly, the fixing member 106 may include one or more rods 109, which is can be extended through the holes 108 to fit with the holes 108 to limit the movement of the fixing member 106 in the second direction X and in the third direction Z. The third direction Z is perpendicular both to the first direction X and the second direction Y.

In some embodiments, the holes 108 located at the plane extending along the X and Y directions can be slot holes, that is, the dimension (that is, length) of the holes 108 in the second direction Y is larger than that (that is, width) in the first direction X. The slot holes define the motion amplitude of the rods 109 in the second direction Y in response to the contact between the roller 103 and the pedal. It is to be understood that the motion amplitude is substantially defined by the length of the slot holes 108. Besides, as shown in Fig. 1b or 1c, the fixing member 106 has a corresponding rod 109 as described above. In some embodiments, a pair of stoppers 112 may be disposed on the rod 109 extending along the third direction Z and through the hole 108. In some embodiments the stoppers 112 may be implemented by gasket or nut. The stoppers 112 are respectively positioned at two sides of the plane extending along directions X and Y of the attaching member 101, so as to limit the movement of the fixing member 106 as well as the roller 103 and the sensor 104 fixed onto the fixing member 106 in the third direction Z. This would help to maintain the pressure applied onto the pedal or step only in the second direction Y, with no pressure components in the other two directions, thereby improving accuracy and stability of state detection.

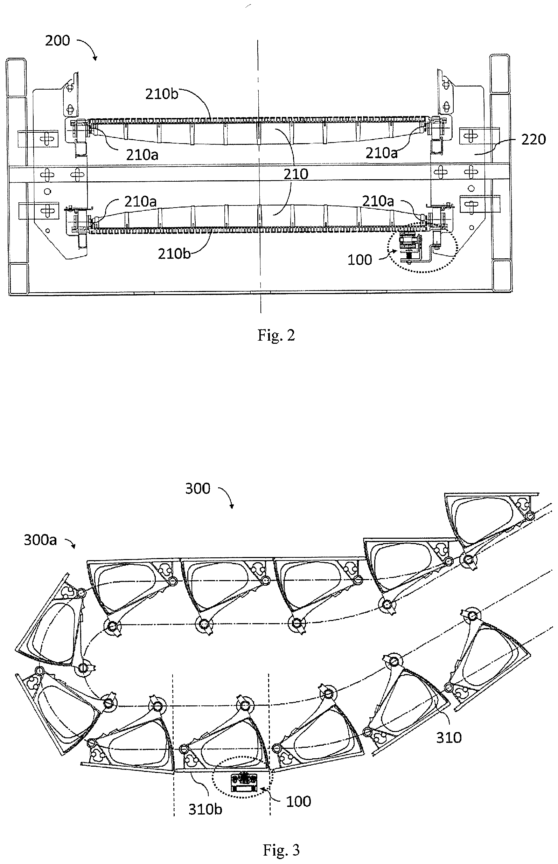

The detection device 100 described above can be used in connection with various types of conveyors. For example, Fig. 2 shows a view of an end face of a step-less horizontal conveyor 102 according to embodiments of the present disclosure. In this embodiment, the step-less horizontal conveyor 102 can be a pedestrian walk or a transport facility at public place, such as airport or bus station.

In the embodiments as shown in Fig. 2, the pedal 210 is step-less and the detection device 100 is arranged at a returning side of the conveyor 200, such that the roller 103 is abutted against the plane 210b in which the pedal 210 lies. In this way, the detection device 100 can detect the operating state of the step-less horizontal conveyor 200 by directly detecting the operating state of the pedal 210. The term "returning side" used herein refers to a side opposing to a transport side for carrying people or goods. In most cases, the returning side indicates that a cyclic running step or pedal is located at the bottom space of the conveyor, where conveyor assemblies, such as motor and transmission mechanism are installed. For safety concerns, such returning side is usually enclosed with an outer cover plate and can only be accessed by professionals or maintenance personnel. As illustrated in Fig. 2, the detection device 100 is fixed to a guide rail 220 of the conveyor 200, such that the roller 103 is abutted against the plane 210b in which the continuous horizontal pedals 210 at the returning side of the conveyor 200 lie. In this way, state detection can be executed. The detection device 100 can be mounted at any positions below the plane 210b of the continuous horizontal pedals 210 at the returning side of the step-less conveyor 200, as required. Besides, any number of detection devices 100 can be mounted on the conveyor 200 to detect the operating state of a relatively long step-less horizontal conveyor 200 segment by segment. Alternatively, or in addition, the detection device 100 can also be arranged such that the roller 103 is abutted against a lateral side 210a of the pedal 210.

For the step-less horizontal conveyor 200 as shown in Fig. 2, because the cyclically running pedals (e.g., conveyor plates or conveyor belt) are continuous horizontal pedals, the continuous horizontal pedals can form a continuous running surface no matter at the lateral side 210a or any positions of the horizontal plane 210b. Therefore, the mounting position of the detection surface 100 has a higher flexibility.

The situation of the stepped conveyor will be discussed below. Fig. 3 shows a side view of an end 300a of a stepped conveyor 300 mounted with a detection device. The stepped conveyor 300 can be a rolling escalator across two floors in a shopping mall for instance. The end of the conveyor 300 as shown in Fig. 3 is the end 300a of the conveyor located at a lower floor. At end 300a, steps 310 move horizontally to facilitate the personnel to board or leave. The end 300a can be a step entrance (corresponding to leaving end of the people) or a step exit (corresponding to entering end of the people). In this context, the step entrance indicates the end where the steps are entering the returning side, and the step exit indicates the end where the steps just return to the transport side of people or goods from the returning side. For example, when the step 310 of the conveyor 300 shown in Fig. 3 is operating from the lower floor to the higher floor along a tilted direction, the end 300a of the conveyor 300 is a step exit (corresponding to entering end of the people).

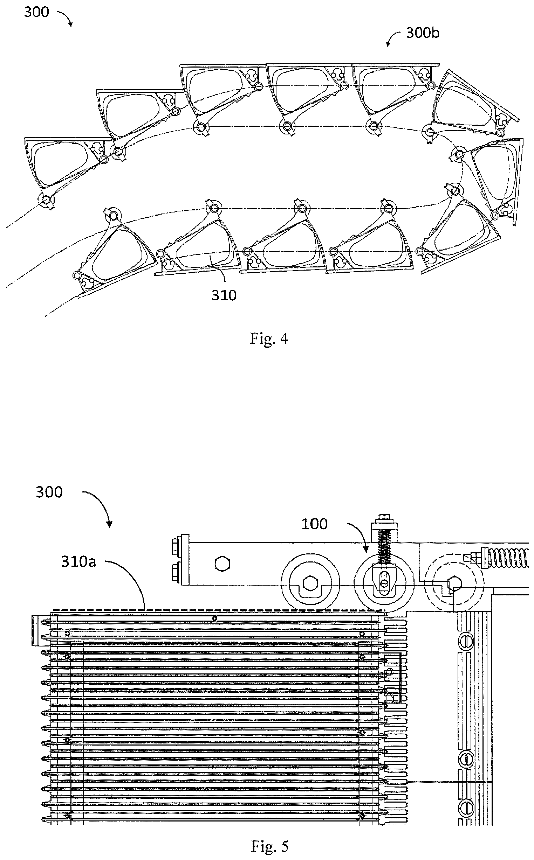

As shown in Fig. 3, in order to facilitate the passenger to board the escalator, the steps 310 move horizontally at the entering end of the personnel 310a and does not form a step, and then gradually forms the steps. The formed steps gradually disappears when they are approaching the exit end of the people (shown in Fig. 4), and the steps will move horizontally again. It is to be noted that different from the step-less horizontal conveyor 200 in Fig.2, in the case of the stepped conveyor 300, the detection device 100 cannot be mounted below the steps running along a tilted plane to detect the operating state. This is because, as shown in the right part of Fig. 3, several steps running along the tilted plane do not form a continuous flat surface any more, rather, they maintain a form of segmented and non-continuous steps, which is also the case at the returning side.

As shown in Fig. 3, the detection device 100 is mounted at the returning side of an end 300a of a lower floor, such that the roller 103 is abutted against a plane 310b in which the step 310 lies, to detect the operating state of stepped conveyor 300 by directly detecting the operating state of the step 310. It is beneficial to mount the detection device 100 in an area defined by two vertical lines indicated in Fig. 3, because several steps 310 at the returning side form a continuous flat surface in this area. In this case, the detection device 100 mounted in this area will not impede the motion of the step 310 in any manner. On the contrary, if the detection device 100 is mounted below steps 310 running along the tilted plane, the steps 310 will cause unexpected obstacles to the movement of the step due to the discontinuity of the steps 310.

Fig. 4 illustrates a side view of the other end 310b of the stepped conveyor 300. For example, when the step 310 of the conveyor 300 shown in Fig. 3 or 4 is running from a lower floor to a higher floor along a tilted direction, the end 310b of the conveyor 300 is a step entrance (corresponding to exiting end of the people) at the higher floor. As shown in Fig. 4, the other end 300b at the higher floor is different from the end 300a at the lower floor. Although several steps at the transport side form a continuous flat surface, the steps at the returning side still fail to form a continuous flat surface due to the limitation of the running track. Therefore, it is inappropriate to mount the detection device 100 to the returning side of the end 300b below the steps 310.

Alternatively, in some embodiments, the detection device 100 can be mounted to the step entrance or the step exit of the stepped conveyor 300, such that the roller 103 is abutted against the lateral side of the step. Fig. 5 shows a detection device 100 mounted at a lateral side of a higher floor in the stepped conveyor 300 according to Fig. 4, such that the roller 103 is abutted against a lateral side 310a of a step 310 at a transport side. It is to be noted that because the end 300b of the higher floor as shown in Fig. 4 can only form a continuous flat side face at a transport side, the detection device 100 can only be mounted in the area of the transport side, such that the roller 103 is abutted against the lateral side 310 of the step 310. Alternatively, at the lower end 300a of the step entrance or step exit as indicated in Fig. 3, the detection device 100 can be mounted to the area of both the transport side and the returning side because both cases form continuous flat side face, such that the roller 103 is abutted against the lateral side 310a of the step 310.

The above description is just optional embodiments of the present disclosure and do not limit the present disclosure. For those skilled in the art, the present disclosure can have various modifications and alterations. Any amendments, equivalent substitutions and improvements should all be included in the protection scope of the present disclosure as long as they are within the spirit and principle of the present disclosure.

## Claims

1. A detection device (100) for a conveyor (200, 300), comprising:
an attaching member (101) for fixing the detection device (100) to the conveyor (200, 300);
an axle (102) coupled to the attaching member (101);
a roller (103) rotatably arranged around the axle (102) and abutting against a pedal (210, 310) of the conveyor (200, 300), the roller (103) being actuated by the pedal (210, 310) responsive to a movement of the pedal (210, 310) along a first direction (X); and
a sensor (104) configured to sense a signal indicating an operating state of the roller (103) for detecting an operating state of the conveyor (200, 300).

2. The detection device (100) of claim 1, comprising:
a coupling member (105) compressibly coupled between the axle (102) and the attaching member (101) in a second direction (Y) that is substantially perpendicular to the first direction (X), the coupling member (105) applying a pressure to the pedal (210, 310) via the roller (103) in the second direction (Y) in response to a contact of the roller (103) with the pedal (210, 310).

3. The detection device (100) of claim 2, wherein the coupling device (105) comprises:
a fixing member (106) for fixing the axle (102) and the sensor (104) to maintain the position of the roller (103) relative to the sensor (104); and
an elastic member (107) compressibly coupled between the fixing member (106) and the attaching member (101) in the second direction (Y) for applying the pressure to the pedal (210, 310) in the second direction (Y).

4. The detection device (100) of claim 3, wherein the attaching member (101) has a hole (108), and the fixing member (106) includes a rod (109) extending through the hole (108) for limiting movement of the fixing member (106) in the second direction (Y) and in a third direction, the third direction being perpendicular to the first direction (X) and the second direction (Y).

5. The detection device (100) of claim 1, wherein a surface of the roller (103) is made of nylon, rubber or metal.

6. The detection device (100) of claim 1, wherein a metal point (111) is arranged at an end face (110) of the roller (103), the end face (110) being proximate to the sensor (104).

7. The detection device (100) of claim 1, wherein the sensor (104) comprises at least one of a contact sensor and a non-contact sensor.

8. The detection device (100) of claim 7, wherein the non-contact sensor (104) is selected from a group consisting of a proximity sensor, an ultrasonic sensor, a photoelectric sensor, a magneto-electric sensor, and a laser sensor.

9. A conveyor (200, 300) including the detection device (100) of any of claims 1-8, the detection device (100) being configured to detect an operating state of the conveyor (200, 300) by detecting an operating state of the pedal (210, 310) of the conveyor (200, 300).

10. The conveyor (200) of claim 9, wherein the pedal (210) is step-less, and the detection device (100) is arranged so that the roller (103) abuts against a lateral side (210a) of the pedal (210).

11. The conveyor (200) of claim 9, wherein the pedal (210) is step-less, and the detection device (100) is arranged at a returning side of the conveyor (200) so that the roller (103) abuts against a plane (210b) of the pedal (210).

12. The conveyor (300) of claim 9, wherein the pedal (310) includes steps, and the detection device (100) is arranged at an entrance or an exit of the conveyor (300) so that the roller (103) abuts against a lateral side (310a) of a step.

13. The conveyor (200, 300) of claim 9, wherein the pedal (310) includes steps, and the detection device (100) is arranged at a returning side of a lower end (300a) of the conveyor (300) so that the roller (103) abuts against a plane (310b) of the pedal (310).

14. A method for detecting an operating state of a conveyor (200, 300) with the detection device (100) according to any of claims 1-8.
